## Europäisches Patentamt
## European Patent Office
## Office européen des brevets

(19)

(11) Publication number: **0 020 808**
**B1**

(12)

# EUROPEAN PATENT SPECIFICATION

(45) Date of publication of patent specification: **27.06.84**

(21) Application number: **79102203.1**

(22) Date of filing: **02.07.79**

(51) Int. Cl.³: **C 08 F 10/00, C 08 F 4/60, C 08 F 4/02**

(54) Support, catalyst and process for polymerizing olefins.

(43) Date of publication of application:
**07.01.81 Bulletin 81/1**

(45) Publication of the grant of the patent:
**27.06.84 Bulletin 84/26**

(84) Designated Contracting States:
**BE DE FR GB IT NL SE**

(56) References cited:
**FR - A - 2 324 652**
**FR - A - 2 363 583**
**GB - A - 1 505 315**

(73) Proprietor: **THE DOW CHEMICAL COMPANY**
**Dow Center 2030 Abbott Road Post Office Box 1967**
**Midland Michigan 48640 (US)**

(72) Inventor: **Gibbs, Ronald Leigh**
**4933 Antioch B, Baton Rouge**
**Parish of Iberville, Louisiana (US)**

(74) Representative: **Hann, Michael, Dr.**
**Marburger Strasse 38**
**D-6300 Giessen (DE)**

The file contains technical information submitted after the application was filed and not included in this specification

Courier Press, Leamington Spa, England.

## Description

This invention relates to catalyst supports, catalysts, process for preparing such catalyst supports and catalysts and process for polymerizing olefins.

It is well known that olefins such as ethylene, propylene, and 1-butene can be polymerized in the presence of metallic catalysts, particularly the reaction products of organometallic compounds and transition metal compounds to form substantially unbranched polymers of relatively high molecular weight. Typically such polymerizations are carried out at relatively low temperatures and pressures. The resulting generally linear olefin polymers are characterized by greater stiffness and higher density than olefin polymers having highly branched polymer chains.

Following polymerization, it is common to remove catalyst residue from the polymer by separating the polymer from the inert liquid diluent and then repeatedly treating the polymer with an alcohol or similar deactivating agent. Such catalyst deactivation and/or removal procedures are expensive both in time and material consumed as well as the equipment required to carry out such treatment.

Furthermore, most of the known catalyst systems are more efficient in preparing polyolefins in slurry (i.e., wherein the polymer is not dissolved in the carrier) than in solution (i.e., wherein the temperature is high enough to solubilize the polymer in the carrier). The lower efficiencies of such catalysts in solution polymerization are generally believed to be caused by the general tendency of the catalysts to become rapidly depleted or deactivated by significantly higher temperatures than are normally employed in solution processes.

FR—A—2 324 652 concerns a catalyst for the polymerization of olefins and the polymerization of olefins with such a catalyst. According to the general teaching of this specification the catalyst comprises (A) a complex solid compound of titanium consisting substantially of magnesium, titanium, halogen and an electron donor, and (B) an organometal compound of a metal of the groups I to III of the periodic table. The electron donor compound which may be prepared "in situ" is used in a quantity not more than 1 mol per g-atom of magnesium. Example 4 shows the preparation of a catalyst support by reacting magnesium n-dibutyl, silicon tetrachloride and ethyl benzoate as electron donor.

FR—A—2 363 583 concerns a process for the preparation of polymers or copolymers of alpha-olefins with at least 3 carbon atoms. The catalyst, which is employed, comprises according to claim 1 (A) a solid complex of titanium, consisting substantially of magnesium, titanium, halogen and an electron donor, and (B) an organo metallic compound of a metal of the groups I to III of the periodic table. As electron donors alcohols are disclosed on page 6, starting with line 23. On page 8, lines 22 to 25 the reaction of magnesium with an alcohol or a phenol in the presence of a halosilane is described.

FR—A—2 363 583 shows on page 10 the possible co-use of a silicon halide in the co-grinding of the magnesium compound with the electron donor. In the passage from line 9 to line 16 it is stated, that during the co-grinding of the magnesium compound with the electron donor additional compounds can be added, such as silicon halides, polysiloxanes, aluminum compounds, germanium compounds and tin compounds.

GB—A—1 505 315 shows a catalyst system, which is obtained by reacting (1) a magnesium—containing reaction product, obtained by reacting (i) a magnesium halide, (ii) an organic active hydrogen—containing compound, (iii) an organic acid ester and (iv) a silicon or tin compound containing at least one halogen atom with (2) a titaium compound (page 2, lines 36 to 45).

In view of the expense of removing catalyst residues from the polymer, it would be highly desirable to provide a polymerization catalyst which is sufficiently active, even at solution polymerization temperatures, to produce such high quantities of polymer per unit of catalyst that it is no longer necessary to remove catalyst residues in order to obtain a polymer of the desired purity. Among recent attempts to provide catalysts having high activity is that illustrated in U.S. Patent 4,115,319 issued September 19, 1978 and assigned to Montedison.

The present invention, in one aspect, is a catalyst support prepared by the reaction of an aliphatic alcohol with a mixture of an organomagnesium compound and a silicon halide represented by the formula $R'_{4-n}SiX_n$ in a nonpolar solvent. The solid product is then washed several times with a liquid hydrocarbon so as to remove the soluble components.

It is preferred to prepare the support by the controlled addition of the alcohol to the mixture of organomagnesium compound and silicon halide. Alternatively, the mixture of organomagnesium compound and silicon halide can be added to the aliphatic alcohol. The reaction is not temperature dependent within normal chemical reaction limits except as desired to control the particle size of the catalyst support.

In another aspect of the present invention, a catalyst is prepared by adding to the above described support a transition metal compound of the Groups 4b, 5b, 6b, 7b or 8 of Mendeleev's Periodic Table of Elements, followed by the controlled addition of a reducing agent while maintaining the temperature below 70°C, preferably below 30°C. After completion of the reaction, the solid catalyst is washed several times with a liquid hydrocarbon to remove the unreacted quantities of the reactants. Then, when desired, an aluminum alkyl co-catalyst is added. The magnesium:transition metal atomic ratio is desirably from 0.1:1 to 30:1, preferably from 0.5:1 to 3:1 and the aluminum:transition metal atomic ratio is desirably from 5:1 to 200:1 preferably from 10:1 to 30:1.

Still another aspect of the present invention is a process for polymerizing $\alpha$-olefins in the presence of the previously mentioned catalyst under conditions characteristic of Ziegler polymerization.

The catalyst of the present invention provides a means for reducing polymer buildup on the reactor walls, control of the polymer particle size by varying the temperature at which the support is formed as well as limited control of the molecular weight distribution, low color in the polymer and a good bulk density when the polymer is produced by the slurry process. The catalyst also provides a high efficiency at a given magnesium/titanium ratio and products having a generally uniform particle size.

The present invention is most advantageously practiced in a polymerization process wherein an $\alpha$-olefin is polymerized, generally in the presence of hydrogen as a molecular weight control agent, in a polymerization zone containing an inert diluent and the catalyst. The foregoing polymerization process is most benefically carried out under inert atmosphere and relatively low temperature and pressure, although very high temperatures and pressures are optionally employed.

Olefins which are suitably polymerized or copolymerized in the practice of this invention are the aliphatic $\alpha$-monoolefins having from 2 to 18 carbon atoms. Illustratively, such $\alpha$-olefins can include ethylene, propylene, butene-1, pentene-1, 3-methylbutene-1, hexene-1, octene-1, dodecene-1 and octadecene-1. It is understood that $\alpha$-olefins may be copolymerized with other $\alpha$-olefins and/or with other ethylenically unsaturated monomers such as butadiene, isoprene, pentadiene-1,3, styrene, $\alpha$-methyl-styrene and similar ethylenically unsaturated monomers which do not destroy conventional Ziegler catalysts. Most benefits are realized in the polymerization of aliphatic $\alpha$-monoolefins particularly ethylene and mixtures of ethylene and up to 10, especially from 0.1 to 5, weight percent of propylene, butene-1, hexene-1, octene-1 or similar higher $\alpha$-olefin based on total monomer.

The catalyst support employed herein is that solid product resulting from the reaction of a aliphatic alcohol (R"OH) with a mixture of a hydrocarbon soluble organomagnesium compound (MgR$_2$) and a silicon halide (R'$_{4-n}$SiX$_n$), in a non-polar solvent, wherein the molar ratio of ROH:MgR$_2$ is preferably at least 2:1 and the molar ratio of ROH:R'$_{4-n}$SiX$_n$ is such that there is present at least one, preferably 2 to 3 X groups per OH group.

Suitable non-polar solvents for the mixture of organomagnesium compound and silicon halide include, for example, aliphatic and aromatic hydrocarbons having from 5 to 10, preferably from 6 to 8 carbon atoms such as, for example, pentane, hexane, heptane, octane, nonane, decane, benzene, toluene, xylene, and mixtures thereof. The preferred hydrocarbon is that which is ultimately to be employed in the $\alpha$-olefin polymerization reaction.

The purpose of employing the mixture of organo magnesium compound and the silicon halide in a non-polar solvent is to prevent the usual reaction which occurs when such compounds are employed in polar solvents such as diethyl ether or tetrahydrofuran.

The criteria for the ratios of reactants is that there should be present at least one equivalent of alcohol for each alkyl group contained in the organomagnesium compound.

Suitable organomagnesium compounds are those represented by the formula MgR$_2$ which are hydrocarbon soluble wherein each R is independently an aliphatic hydrocarbon group having from 1 to 20 carbon atoms, preferably from 2 to 8 carbon atoms such as, for example, butyl isobutyl magnesium, butyl hexyl magnesium, dihexyl magnesium, dioctyl magnesium, 3-hexenyl hexyl magnesium, di-3-hexenyl magnesium, and mixtures thereof.

Also included are organomagnesium compounds represented by the above formula, MgR$_2$, which are hydrocarbon insoluble, but are readily rendered hydrocarbon soluble by the addition of small solubilizing quantities, e.g. from 5% to 50%, preferably from 10% to 20% by weight of an organo aluminum compound such as triisobutylaluminum, triethylaluminum or other alkyl aluminum compounds or other suitable solubilizing compound which does not poison Ziegler polymerization catalysts.

Such organomagnesium compounds which are normally insoluble in hydrocarbons but which can be rendered soluble as above stated include, for example, dibutyl magnesium, ethyl butyl magnesium, ethyl hexyl magnesium, and mixtures thereof.

The use of such compounds as mentioned above includes the solubilizing quantity of the organo aluminum compound.

In some instances, it may be desirable to add small quantities of an organo aluminum compound even though the organomagnesium compound is sufficiently soluble so as to lower the viscosity.

Suitable silicon halide compounds which can be employed herein include those compounds wherein R' is an alkyl group of from 1—20 carbons, preferably from 1 to 6, most preferably from 1 to 2 carbon atoms and X is Cl, Br or I and n has a value of from 1 to 4 such as, for example, SiCl$_4$, SiBr$_4$, CH$_3$SiCl$_3$, (C$_2$H$_5$)$_2$SiCl$_2$, (CH$_3$)$_3$SiCl, and mixtures thereof.

Suitable aliphatic alcohols (R"OH) which can be employed herein include those having from 1 to 20 carbon atoms, preferably from 1 to 6 carbon atoms, such as, for example, methanol, ethanol, n-propanol, n-butanol, sec-butanol, tert-butanol, octadecanol, 2-propen-1-ol, 2-buten-1-ol, and mixtures thereof.

The temperature of the ROH and mixture of organomagnesium compound and silicon halide is usually maintained from 0°C to the boiling point of the hydrocarbon in which the organomagnesium compound and silicon halide is dissolved, preferably from 0°C to 100°C or less and more preferably from 0°C to 70°C, to control the particle size of the support and subsequently the particle size of the polymer.

If during the preparation of the support, the temperature employed is above 40°C, the temperature should be, immediately after completion of the reaction, lowered to at least 25°C so as to prevent sintering (aggregation) of the particles. The reaction is essentially instantaneous with the addition of the alcohol which is added incrementally so as to aid in the control of the temperature since the reaction is exothermic.

The thus prepared support is then washed with a liquid hydrocarbon so as to remove any of the unreacted reactants and soluble byproducts. Suitable hydrocarbons include, for example, those having from 6 to 8, carbon atoms, such as, pentane, hexane, heptane, octane, nonane, decane, benzene, toluene, xylene, and mixtures thereof. The preferred hydrocarbon is that which is ultimately to be employed in the $\alpha$-olefin polymerization reaction.

The catalyst of this invention is prepared by adding to the above prepared support suspended in any of the aforementioned hydrocarbons, a transition metal compound followed by the controlled addition of a suitable reducing agent such that the reaction temperature is maintained below 70°C, preferably below 40°C and most preferably below 30°C. The hydrocarbon is removed by any suitable means such as decantation, filtration or the like and the solid catalyst is washed with hydrocarbon to remove any unreacted materials.

The atomic ratio is magnesium contained in the support to the transition metal employed is desirably from 0.1:1 to 30:1, preferably from 0.1:1 to 3:1.

The above prepared catalyst can then be employed either alone or in the presence of, as a co-catalyst, an organometallic compound which is a halide, hydride or totally alkylated derivative of the metals of Groups 1a, 2a, 2b, 3a or 4a of the Periodic Table such as, for example, triisobutyl aluminum, triethyl aluminum, diethyl-aluminum chloride, ethylmagnesium bromide, diiso-butyl-aluminum hydride and mixtures thereof, so as to provide a metal (Group 1a, 2a, 2b, 3a or 4a): transition metal atomic ratio of, desirably, from 1:1 to 200:1 preferably from 10:1 to 30:1.

Exemplary transition metal compounds include, for example, the halides, such as the chlorides, bromides, and iodides of the transition metals of Groups 4b, 5b, 6b, 7b and 8 of Mendeleev's Periodic Table of Elements as set forth in *Handbook of Chemistry and Physics*, CRC, 48th Edition (1967—68). Exemplary metals include, for example, titanium, chromium, zirconium, vanadium, tungsten, manganese, molybdenum, ruthenium, rhodium, cobalt, and nickel with titanium, vanadium and zirconium either separately or in combination being preferred. Exemplary preferred transition metal compounds are titanium tetrachloride, titanium trichloride, zirconium tetrachloride, vanadium tetrachloride, vanadium pentachloride, vanadium oxydichloride with the halides, particularly the chlorides, of titanium being most preferred.

Exemplary reducing agents are those of conventional Ziegler catalysts including metals such as aluminum, sodium and lithium; hydrides thereof such as lithium hydride, or sodium borohydride; Grignard reagents such as phenylmagnesium bromide; and preferably organometallic compounds, especially alkyl aluminum compounds. For the purposes of illustration, the especially preferred alkyl aluminum compounds can be represented by the general formula RAlYY' wherein R is alkyl, most advantageously containing from 1 to 12 carbon atoms, Y is alkyl, most advantageously from 1 to 12 carbon atoms, or hydrogen; and Y' is alkyl, most advantageously from 1 to 12 atoms, hydrogen, or halogen, e.g., chlorine or bromine, with the proviso that when Y' is halogen Y is alkyl.

Examples of especially preferred compounds corresponding to the formula RAlYY', include trimethylaluminum, triethylaluminum, triisobutylaluminum, tri-n-butylaluminum, tri-n-pentylaluminum, triisooctylaluminum, tri-n-decylaluminum, tri-n-dodecylaluminum, diethyl-aluminum chloride, and diethylaluminum hydride. Especially preferred are triethylaluminum and triisobutylaluminum. Other organometallic compounds which are suitable include, for example, butyllithium, amylsodium, phenylsodium, dimethylmagnesium, diethyl-magnesium, diethylzinc, butylmagnesium chloride and phenylmagnesium bromide.

It is preferred to carry out the preparation of the catalyst composition in the presence of an inert diluent. Suitable inert organic diluents include, for example, liquified ethane, propane, isobutane, n-butane, n-hexane, the various isomeric hexanes, isooctane, isononane, paraffinic mixtures of alkanes having from 8 to 9 carbon atoms, cyclohexane, methylcyclopentane, dimethylcyclohexane, dodecane, industrial solvents composed of saturated or aromatic hydrocarbons such as kerosene, naphthas, and mixtures of any two or more of the foregoing, especially when freed of impurities which characteristically poison Ziegler catalysts, and especially those having boiling points in the range from —50°C to 200°C. Also included as suitable inert diluents are benzene, toluene, ethylbenzene, cumene, and decalin.

Mixing of the catalyst components to provide the desired catalyst composition is advantageously carried out under an inert atmosphere such as, for example, nitrogen, argon or other inert gas.

In the polymerization process employing the aforementioned catalyst composition, polymerization is effected by adding a catalytic amount of the catalyst composition to a polymerization zone containing $\alpha$-olefin monomer, or vice versa. The polymerization zone is desirably maintained at temperatures in the range of form 0° to 300°C, preferably at slurry polymerization temperatures (e.g., from 30° to 90°C), for a residence time of 10 minutes to several hours, preferably from 15 minutes to 3 hours. It is generally desirable to carry out the polymerization in the absence of moisture and oxygen. The amount of the catalyst composition is advantageously within the range of from 0.0001 to 1 milligram-atom of transition metal per liter of diluent. The most advantageous catalyst concentration depends upon polymerization conditions such as temperature, pressure, solvent and presence of catalyst poisons. In the polymerization process, a carrier, which may be an inert organic diluent or solvent or excess monomer, is generally employed. In order to realize the full benefit of the high efficiency catalyst of the present invention care must be taken to avoid oversaturation of the solvent with polymer. If such oversaturation occurs before the catalyst becomes depleted, the full efficiency of the catalyst is not realized. For best results, it is preferred that the amount of polymer in the carrier not exceed 50 weight percent based on the total weight of the reaction mixture. Inert diluents employed in the polymerization recipe are suitable as defined hereinbefore.

The polymerization pressures usually employed are relatively low, e.g., from 372,7 to 3530,4 kPa (40 to 500 psig). However, polymerization within the scope of the present invention can occur at pressures from atmospheric up to pressure determined by the capabilities of the polymerization equipment. During polymerization it is very desirable to stir the polymerization recipe to obtain better temperature control, to maintain uniform polymerization mixtures throughout the polymerization zone, and to insure contact between the olefin and the catalyst.

Hydrogen is often employed in the practice of this invention to lower molecular weight of the resultant polymer. For the purpose of this invention, it is beneficial to employ hydrogen in concentrations ranging from 0.001 to 1 mole per mole of monomer. The larger amounts of hydrogen within this range are found to produce generally lower molecular weight polymers. It is understood that hydrogen can be added with a monomer stream to the polymerization vessel or separately added to the vessel before, during or after addition of the monomer to the polymerization vessel, but during or before the addition of the catalyst.

The monomer or mixture of monomers is contacted with the catalyst composition in any conventional manner, preferably by bringing the catalyst composition and monomer together with intimate agitation provided by suitable stirring or other means. In the case of more rapid reactions with more active catalysts, means can be provided for refluxing monomer and solvent, if any of the latter is present, and thus remove the heat of reaction. In any event, adequate means should be provided for dissipating the exothermic heat of polymerization. If desired, the monomer can be brought in the vapor phase into contact with the catalyst composition, in the presence or absence of liquid material. The polymerization can be effected in the batch manner, or in a continuous manner, such as, for example, by passing the reaction mixture through an elongated reaction tube which is contacted externally with suitable cooling medium to maintain the desired reaction temperature, or by passing the reaction mixture through an equilibrium overflow reactor or a series of the same.

The polymer is readily recovered from the polymerization mixture by driving off unreacted monomer and solvent if any is employed. No further removal of impurities is required. Thus, a significant advantage of the present invention is reduction of the catalyst residues remaining in the polymer. Often, the resultant polymer is found to contain insignificant amounts of catalyst residue such that catalyst removal procedures can be entirely eliminated.

The following examples are given to illustrate the invention.

Example 1
A. Preparation of catalyst support
To a beaker was added 0.03 moles of a 0.5 molar solution of dihexyl magnesium in hexane. To this was added 0.03 moles of silicon tetrachloride in a single portion and the total volume of the mixture was adjusted to 400 ml with additional dry hexane. As the mixture was stirred at 25°C a second solution was added dropwise. This solution consisted of 0.06 moles of normal propyl alcohol dissolved in 50 ml of hexane. No temperature control was maintained. Upon finishing the addition the reaction mixture was stirred for an additional 10 minutes and then the stirring was stopped which allowed the newly formed precipitate to settle. The hexane was decanted and the solid was washed five times with dry hexane and then suspended in 300 ml of hexane with agitation.

B. Preparation of catalyst
1. To the support prepared in A above was added 0.15 moles of $TiCl_4$ in a single portion followed by a dropwise addition of 0.3 moles of diethyl aluminum chloride (as a 25% solution in hexane). The temperature was maintained below 40°C during the addition. The resultant brown solid was then allowed to settle and the hexane was decanted. The solid was washed 5 times with dry hexane and suspended in 200 ml of hexane. The Mg:Ti atomic ratio was 0.33:1.

2. To a support prepared as in A above was added 0.01 moles of $TiCl_4$ in a single portion. To this was added dropwise 0.02 moles of diethyl aluminum chloride (25% solution in hexane). The temperature was maintained below 40°C throughout the addition. The solid was washed 5 times in dry hexane and suspended in 200 ml of hexane. The Mg:Ti atomic ratio was 3:1.

C. Polymerization of ethylene

1. A one liter, batch reactor fitted with a mechanical stirrer, gas inlet tubes and controlled temperature jacket was filled with 500 ml of dry hexane. Under a nitrogen atmosphere was added 0.6 millimoles of triiso-butyl aluminum and 0.02 millimoles (based on the Ti concentration) of the brown solid catalyst prepared in B-1. The Al:Ti atomic ratio was 30:1. This mixture was then sealed and purged with hydrogen. The temperature was set at 80°C and 343,2 kPa (50 psi) hydrogen was introduced. With stirring a constant 1 167,0 kPa (170 psi) ethylene was added and maintained throughout the 90 minute reaction time. The resultant polyethylene weighed 98 g (102,000 g polymer/g Ti), and had a melt index of 0.11 g/10 min with a 200 g weight.

2. In like manner as in C-1 ethylene was polymerized employing the catalyst prepared in B-2. The concentration of catalyst was again 0.02 millimoles (based on Ti concentration) and 0.6 millimoles of triisobutyl aluminum was also used. The Al:Ti atomic ratio was 30:1. The resultant polymer weighed 270 g (280,000 g polymer/g Ti) and had a 0.28 melt index as measured in example C-1.

Example 2

A catalyst prepared as in example 1-B-2 was employed to polymerize ethylene in the same manner as in Example 1-C-1 except that the amount of co-catalyst (triisobutylaluminum) was changed and the effect noted.

(A) 0.02 millimoles of catalyst 1-B-2 was employed with 0.2 millimoles of triisobutyl-aluminum. The Al:Ti atomic ratio was 10:1. The resultant polymer weighed 161 g (170,000 g polymer/g Ti) and had a melt index of 0.13.

(B) 0.01 millimoles of catalyst 1-B-2 was employed with 1.0 millimoles of triisobutyl-aluminum. The Al:Ti atomic ratio was 100:1. The resultant polymer weighed 308 grams (640,000 g polymer/g Ti) and had a melt index of 0.32.

Example 3

A support was prepared in the same manner as in example 1-A employing 0.02 moles of butyl isobutyl magnesium and 0.02 moles of silicon tetrachloride. The 0.04 moles of isopropyl alcohol was added dropwise forming a white precipitate which was decanted and washed 5 times with dry hexane and then suspended in 250 ml of hexane with mechanical agitation.

To this was added 0.01 moles of $TiCl_4$ followed by the dropwise addition of 0.02 moles of diethyl aluminum chloride. The resultant brown solid catalyst was washed several times with hexane. The Mg:Ti atomic ratio was 2:1.

To the same reactor system as employed in example 1-C-1 was added 0.05 millimoles (based on Ti concentration) of this catalyst and 2 millimoles of triisobutylaluminum. The Al:Ti atomic ratio 40:1. The resultant polyethylene weighed 226 grams (190,000 g polymer/g Ti) and had a 0.4 melt index.

Example 4

(A) To a beaker was added 0.05 moles of a 0.5 molar solution of butyl isobutyl magnesium in hexane. To this was added 0.05 moles of silicon tetrachloride in a single portion and the total volume of mixture was adjusted to 500 ml with hexane. The stirring was begun and this solution was heated to 45°C. Next, 0.10 moles of normal propyl alcohol was added dropwise over a 30 minute period. As soon as the exothermic addition was complete, the temperature was rapidly lowered to 25°C. The solid was decanted and washed five times with hexane. Next, 0.15 moles of $TiCl_4$ was added and stirred with the solid in 350 ml of hexane. To this was added 0.30 moles of diethyl aluminum chloride while maintaining a temperature below 40°C. The resulting brown solid catalyst was decanted and washed five times with hexane. The Mg:Ti atomic ratio was 0.33:1.

This material was used in the same reactor and under the same conditions as given in Example 1-A, 0.02 millimoles of catalyst (based on Ti concentration) was used in conjunction with 0.6 millimoles of triisobutylaluminum. The resultant polymer weighed 134 grams (140,000 g polymer/g Ti) and had a 0.3 melt index. 50% of the polymer was retained by a 100 mesh screen (sieve opening 0.149 mm).

(B) The procedure above was followed except that the normal propyl alcohol addition was made at 60°C instead of 45°C. The resultant polymer weighed 141 grams (147,000 g polymer/g Ti), had a melt index of 0.35 and 30% was retained by a 100 mesh screen (sieve opening 0.149 mm).

The above example demonstrated the effect that temperature control during the preparation of the catalyst support has on the particle size of polymers prepared from catalysts supported thereon.

Example 5

To a beaker was added 0.025 mole of dihexyl magnesium in hexane. To this was added 0.025 mole of silicon tetrachloride and the volume adjusted to 400 ml of hexane. Normal propyl alcohol (0.05 mole) was diluted with 50 ml of hexane and added dropwise with stirring. The starting temperature of the addition was 25°C. The resulting white solid support was decanted and washed five times with hexane.

To a slurry of the above prepared white solid support in 300 ml of hexane was added 0.025 mole of $TiCl_4$ with stirring. Next was added 0.05 mole of triisobutylaluminum from an 18% by weight solution in hexane. The temperature was maintained below 35°C during the addition. The resultant solid catalyst was decanted and washed 5 times with hexane. The Mg:Ti atomic ratio was 1:1.

The same reactor and conditions were employed as in example 1-C with the following catalyst amounts, 0.01 millimole of the above prepared catalyst (based on Ti concentration) and 0.3 millimole of triisobutylaluminum were added to the reactor. The Al:Ti atomic ratio was 30:1. The resultant polymer weighed 149 g (310,000 g polymer/g Ti) and had a melt index of 0.07.

Example 6
A. Preparation of catalyst
To a beaker was added 0.056 mole of n-butyl-sec-butyl magnesium in hexane. To this was added 0.056 mole of silicon tetrachloride and the volume adjusted to 400 cc of hexane. Normal propyl alcohol (0.112 mole) was diluted with 50 cc of hexane and added dropwise with stirring. The starting temperature of the addition was 10°C. During the addition the temperature was controlled such that the maximum temperature was 12°C and the final temperature was 8°C. The resulting white solid was decanted and washed five times with hexane.

To a slurry of the white solid in 250 cc of hexane was added 0.112 mole of $TiCl_4$ with stirring. Next was added 0.123 mole of triisobutylaluminum from an 18% by weight solution in hexane. The temperature was maintained at 30°C during the addition. The resultant solid catalyst was decanted and washed 5 times with hexane. The Mg:Ti atomic ratio was 0.5:1.

B. Polymerization of ethylene
The same reactor and conditions were employed as in example 1-C with the following catalyst amounts, 0.04 millimole of the above prepared catalyst (based on Ti concentration) and 4.0 millimole of triisobutylaluminum were added to the reactor. The Al:Ti atomic ratio was 100:1. After a 2 hour reaction time, the resultant polymer weighed 133 g (69,300 g polymer/g Ti) and had a melt index of 0.60.

Example 7
A. Preparation of catalyst
To a beaker was added 0.120 mole of propyl alcohol dissolved in 200 ml of hexane. A second mixture, comprised of 0.059 mole of butyl-sec-butyl magnesium and 0.059 mole of silicon tetrachloride in 100 ml of hexane, was added to the alcohol solution while it stirred at 30°C. The addition time was approximately 20 minutes. After the exothermic reaction subsided, the resultant white solid was washed several times with fresh hexane. This solid was suspended in 350 ml of hexane and 0.072 mole of titanium tetrachloride was added in a single portion with stirring. To this was added 0.088 mole of diethyl aluminum chloride while maintaining the temperature below 40°C. The resultant brown solid was decanted and washed 5 times with dry hexane.

B. Polymerization of ethylene
This material was used in the same reactor and conditions as described in Example 1-C. The partial pressure of hydrogen was 205,9 kPa (30 psi) instead of 343,2 kPa (50 psi), but the remainder of the values were those given in Example 1-C. The catalyst, 0.015 millimole, was placed in the reactor with 0.750 millimole of trisobutylaluminum. The Al:Ti atomic ratio was 50:1. The resultant polymer weighed 185 g (250,000 g polymer/g Ti) and had a melt index of 0.10.

**Claims**

1. A catalyst support obtained by the reaction of an organo magnesium compound, a silicon halide and an electron donor, characterized in that said catalyst support is the reaction product formed by reacting (1) a mixture of an organo magnesium compound represented by the formula $MgR_2$ and a silicon halide represented by the formula $R'_{4-n}SiX_n$, said mixture being in a non-polar solvent, with (2) an alcohol represented by the formula $R''OH$; wherein the organo magnesium compound is or can be rendered hydrocarbon soluble and wherein each R, R' and R'' is independently an aliphatic hydrocarbon group having from 1 to 20 carbon atoms, X is Cl, Br or I, n has a value of from 1 to 4 and wherein the molar ratio of $R''OH:MgR_2$ is at least 2:1 and the molar ratio of $R''OH:R'_{4-n}SiX_n$ is sufficient to provide at least one X group per OH group.

2. The catalyst support of Claim 1 wherein R has from 2 to 8 carbon atoms, R' and R'' have from 1 to 6 carbon atoms, X is chlorine or bromine; wherein the ratio of $R''OH:R'_{4-n}SiX_n$ is sufficient so as to provide from 2 to 3 X groups per OH group; and wherein said non-polar solvent has a hydrocarbon having from 5 to 10 carbon atoms.

3. The catalyst support of Claim 2 wherein the organomagnesium compound is dibutyl magnesium, butyl isobutyl magnesium, dihexyl magnesium, ethyl hexyl magnesium, dioctyl magnesium or a mixture thereof; the aliphatic alcohol is ethanol, n-propanol, isopropanol, n-butanol, sec-butanol or a mixture thereof; and the silicon halide is $SiCl_4$, $CH_3SiCl_3$, $(CH_3)_2SiCl_2$, $(CH_3)_3SiCl$, $SiBr_4$, $(Et)SiCl_3$ or a mixture thereof.

4. A catalyst composition resulting from the addition of a reducing agent at a temperature below 70°C to a mixture of the support of Claims 1, 2 or 3 suspended in an inert liquid hydrocarbon and a transition metal compound of Groups 4b, 5b, 6b, 7b, or 8 of Mendeleev's Periodic Table in proportions such that the magnesium:transition metal atomic ratio is from 0.1:1 to 30:1 followed by washing the resultant solid catalyst product with an inert liquid hydrocarbon.

5. The catalyst composition of Claim 4 wherein the transition metal compound is a metal from Groups 4b or 5b.

6. The catalyst composition of Claim 5 wherein the transition metal is titanium or vanadium.

7. The catalyst composition of Claims 4, 5 or 6 which contains, as a co-catalyst, an organometallic compound which is a halide, hydride or totally alkylated derivative of the metals of Groups 1a, 2a, 2b, 3a or 4a of the Periodic Table and is present in quantities such that the metal:transition metal ratio is from 1:1 to 200:1.

8. A process for the polymerization of one or more alpha olefins under conditions characteristic of Ziegler polymerization which process comprises employing as a polymerization catalyst the composition of any one of Claims 4 to 7.

9. The process of Claim 8 wherein the transition metal compound is titanium tetrachloride and the co-catalyst is triisobutylaluminum.

10. The process of Claims 8 or 9 wherein the alpha olefin is ethylene or a mixture of ethylene and at least one other polymerizable ethylenically unsaturated compound.

## Patentansprüche

1. Ein durch Umsetzung einer Organomagnesiumverbindung, eines Siliciumhalogenides und eines Elektrondonors erhaltener Katalysatorträger, dadurch gekennzeichnet, daß der Katalysatorträger das Reaktionsprodukt der Umsetzung ist von

(1) einer Mischung einer Organomagnesiumverbindung entsprechend der Formel $MgR_2$ und eines Siliciumhalogenids entsprechend der Formel $R'_{4-n}SiX_n$, wobei diese Mischung in einem nicht-polaren Lösungsmittel vorliegt, mit

(2) einem Alkohol entsprechend der Formel R"OH, wobei die Organomagnesiumverbindung kohlenwasserstofflöslich ist oder gemacht werden kann und wobei jedes R, R' und R" eine aliphatische Kohlenwasserstoffgruppe mit 1 bis 20 Kohlenstoffatomen ist, X Cl, Br oder J ist, n einen Wert von 1 bis 4 hat und das Molverhältnis von R"OH:$MgR_2$ mindestens 2:1 ist und das Molverhältnis von R"OH:$R'_{4-n}SiX_n$ ausreichend ist, um mindestens eine X-Gruppe pro OH-Gruppe bereitzustellen.

2. Der Katalysatorträger nach Anspruch 1, dadurch gekennzeichnet, daß R 2 bis 8 Kohlenstoffatome enthält, R' und R" 1 bis 6 Kohlenstoffatome enthalten, X Chlor oder Brom ist, wobei das Verhältnis von R"OH:$R'_{4-n}SiX_n$ ausreichend ist, um 2 bis 3 X-Gruppen pro OH-Gruppe bereitzustellen und wobei das nichtpolare Lösungsmittel ein Kohlenwasserstoff mit 5 bis 10 Kohlenstoffatomen ist.

3. Der Katalysatorträger nach Anspruch 2, dadurch gekennzeichnet, daß die Organomagnesiumverbindung Dibutylmagnesium, Butylisobutylmagnesium, Dihexylmagnesium, Ethylhexylmagnesium, Dioctylmagnesium oder eine Mischung davon ist; der aliphatische Alkohol Ethanol, n-Propanol, Isopropanol, n-Butanol, sek-Butanol oder eine Mischung davon ist; und das Siliciumhalogenid $SiCl_4$, $CH_3SiCl_3$, $(CH_3)_2SiCl_2$, $(CH_3)_3SiCl$, $SiBr_4$, $(Et)SiCl_3$ oder eine Mischung davon ist.

4. Eine Katalysatorzusammensetzung, die entsteht durch Zugabe eines Reduktionsmittels bei einer Temperatur unterhalb 70°C zu einer Mischung des Trägers nach den Ansprüchen 1, 2 oder 3, suspendiert in einem inerten flüssigen Kohlenwasserstoff, und einer Übergangsmetallverbindung der Gruppen 4b, 5b, 6b, 7b oder 8 des Periodensystems von Mendeleev in solchen Mengenverhältnissen, daß das Atomverhältnis von Magnesium:Übergangsmetall 0,1:1 bis 30:1 nach dem Waschen des erhaltenen festen Katalysatorproduktes mit einem inerten flüssigen Kohlenwasserstoff ist.

5. Katalysatorzusammensetzung nach Anspruch 4, dadurch gekennzeichnet, daß die Übergangsmetallverbindung ein Metall der Gruppen 4b oder 5b ist.

6. Katalysatorzusammensetzung nach Anspruch 5, dadurch gekennzeichnet, daß das Übergangsmetall Titan oder Vanadin ist.

7. Katalysatorzusammensetzung nach den Ansprüchen 4, 5 oder 6, dadurch gekennzeichnet, daß sie als Cokatalysator eine organometallische Verbindung enthält, die ein Halogenid, Hydrid oder ein vollständig alkyliertes Derivat von einem der Metalle der Gruppen 1a, 2a, 2b, 3a oder 4a des Periodensystems ist und in derartigen Mengen anwesend ist, daß das Verhältnis von Metall:Übergangsmetall 1:1 bis 200:1 beträgt.

8. Verfahren zur Polymerisation von einem oder mehreren alpha-Olefinen unter charakteristischen Bedingungen für die Ziegler-Polymerisation, dadurch gekennzeichnet, daß als Polymerisationskatalysator die Zusammensetzung von einem der Ansprüche 4 bis 7 verwendet wird.

9. Verfahren nach Anspruch 8, dadurch gekennzeichnet, daß die Übergangsmetallverbindung Titantetrachlorid und der Cokatalysator Triisobutylaluminium ist.

10. Verfahren nach den Ansprüchen 8 oder 9, dadurch gekennzeichnet, daß das alpha-Olefin Ethylen oder eine Mischung von Ethylen und mindestens einer anderen polymerisierbaren ethylenisch ungesättigten Verbindung ist.

## Revendications

1. Support de catalyseur obtenu par la réaction d'un composé organomagnésien, d'un halogénure de silicium et d'un donneur d'électron, caractérisé par le fait que ledit support de catalyseur est le produit de réaction formé en faisant réagir (1) un mélange d'un composé organomagnésien représenté par la formule $MgR_2$ et d'un halogénure de silicium représenté par la formule $R'_{4-n}SiX_n$, ledit mélange étant dans un solvant non-polaire, avec (2) un alcool représenté par la formule $R''OH$; le composé organomagnésien étant ou pouvant être rendu soluble dans les hydrocarbures, et formules dans lesquelles chaque R, R' et R'' sont indépendamment les uns des autres des groupes hydrocarbonés aliphatiques ayant de 1 à 20 atomes de carbone; X est Cl, Br ou I; n a une valeur de 1 à 4, le rapport molaire de $R''OH:MgR_2$ étant au moins de 2:1, et le rapport molaire de $R''OH:R'_{4-n}SiX_n$ étant suffisant pour fournir au moins un groupe X par groupe OH.

2. Support de catalyseur selon la revendication 1, dans lequel R a de 2 à 8 atomes de carbone; R' et R'' ont de 1 à 6 atomes de carbone; X est du chlore ou du brome; dans lequel le rapport de $R''OH:R'_{4-n}SiX_n$ est suffisant pour fournir de 2 à 3 groupes X par groupe OH; et dans lequel ledit solvant non-polaire comprend un hydrocarbure ayant de 5 à 10 atomes de carbone.

3. Support de catalyseur selon la revendication 2, dans lequel le composé organomagnésien est le magnésium-dibutyle; magnésium-butyle, isobutyle; magnésium-dihexyle; magnésium-éthyle, hexyle; magnésium-dioctyle ou un mélange de ces composés; l'alcool aliphatique est l'éthanol, le n-propanol, l'isopropanol, le n-butanol, le sec-butanol ou un de leurs mélanges; et l'halogénure de silicium est $SiCl_4$, $CH_3SiCl_3$, $(CH_3)_2SiCl_2$, $(CH_3)_3SiCl$, $SiBr_4$, $(Et)SiCl_3$ ou un de leurs mélanges.

4. Composition catalytique résultant de l'addition d'un agent réducteur, à une température inférieure à 70°C, à un mélange du support des revendications 1, 2 ou 3, en suspension dans un hydrocarbure liquide inerte et d'un composé de métal de transition des groupes 4b, 5b, 6b, 7b ou 8 de la classification périodique de Mendeleev, dans des proportions telles, que le rapport atomique magnésium:métal de transition est compris entre 0,1:1 et 30:1, puis du lavage du produit catalytique solide résulant avec un hydrocarbure liquide inerte.

5. Composition catalytique selon la revendiction 4, dans laquelle le composé de métal de transition est un métal des groupes 4b ou 5b.

6. Composition catalytique selon la revendication 5, dans laquelle le métal de transition est le titane ou le vanadium.

7. Composition catalytique selon les revendications 4, 5 ou 6, qui contient comme co-catalyseur un composé organométallique qui est un halogénure, un hydrure, ou un dérivé entièrement alkylé, des métaux des groupes 1a, 2a, 2b, 3a ou 4a de la classification périodique, et qui est présent en des quantités telles que le rapport métal:métal de transition est compris entre 1:1 et 200:1.

8. Procédé pour la polymérisation d'une ou plusieurs alpha-oléfine(s) dans des conditions caractéristiques de la polymérisation de Ziegler, lequel procédé consiste à utiliser, comme catalyseur de polymérisation, la composition selon l'une quelconque des revendications 4 à 7.

9. Procédé selon la revendication 8, dans lequel le composé de métal de transition est le tétrachlorure de titane et le co-catalyseur est le tri-isobutylaluminium.

10. Procédé selon les revendications 8 ou 9, dans lequel l'alpha-oléfine est l'éthylène ou un mélange d'éthylène et d'au moins un autre composé polymérisable éthyléniquement insaturé.